# EUROPÄISCHE PATENTSCHRIFT

(11) **EP 2 339 231 B1**
(45) Veröffentlichungstag und Bekanntmachung des Hinweises auf die Patenterteilung: **16.08.2017**
(21) Anmeldenummer: 10193402.4
(22) Anmeldetag: 02.12.2010
(51) Int. Cl.: F21V 19/00, F21K 99/00, F21V 23/02, F21V 29/00, F21S 8/10, H05B 33/08, B60Q 1/00, F21W 101/02

(54) **Lichtmodul für eine Beleuchtungseinrichtung eines Kraftfahrzeugs sowie Beleuchtungseinrichtung eines Kraftfahrzeugs mit einem solchen Lichtmodul**
Light module for a lighting device of a motor vehicle and lighting device of a motor vehicle with such a light module
Module d'éclairage pour un dispositif d'éclairage d'un véhicule automobile et dispositif d'éclairage d'un véhicule automobile doté d'un tel module d'éclairage

(30) Priorität: 22.12.2009 DE 102009060790
(43) Veröffentlichungstag der Anmeldung: 29.06.2011
(73) Patentinhaber: Automotive Lighting Reutlingen GmbH, 72762 Reutlingen (DE)
(72) Erfinder: Schnerr, Michael, 70565 Stuttgart (DE); Blum, Dirk, 72076 Tübingen (DE)
(74) Vertreter: DREISS Patentanwälte PartG mbB

(56) Entgegenhaltungen:
- EP-A1- 2 031 299
- EP-A2- 0 980 788
- EP-A2- 1 048 893
- EP-A2- 1 482 241
- EP-A2- 1 853 096
- DE-U1-202004 003 793
- US-A1- 2005 254 251
- US-A1- 2009 175 044

## Beschreibung

Die vorliegende Erfindung betrifft ein Lichtmodul für eine Beleuchtungseinrichtung eines Kraftfahrzeugs, wie beispielsweise aus dem Dokument DE 20 2004 003 793 U1 bekannt. Das Lichtmodul umfasst mindestens eine Halbleiterlichtquelle sowie ein mit der mindestens einen Halbleiterlichtquelle in Verbindung stehendes Ansteuermodul. Die Erfindung betrifft außerdem eine Beleuchtungseinrichtung eines Kraftfahrzeugs, umfassend mindestens ein Lichtmodul mit mindestens einer Halbleiterlichtquelle.

Aus dem Stand der Technik sind Beleuchtungseinrichtungen für Kraftfahrzeuge, die Halbleiterlichtquellen, bspw. in Form von Leuchtdioden (LEDs), umfassen, in unterschiedlichen Ausführungsformen bekannt. Derartige Beleuchtungseinrichtungen können als eine beliebige Kraftfahrzeugleuchte, insbesondere zur Anordnung am Heck oder einer Seite eines Kraftfahrzeugs, ausgebildet sein.

Ebenso können die Beleuchtungseinrichtungen jedoch auch als LED-Scheinwerfer ausgebildet sein, wobei hierbei vorzugsweise Hochleistungs-LEDs als Halbleiterlichtquellen zum Einsatz kommen, die weißes oder weißliches Licht in ausreichender Lichtstärke zur Verfügung stellen, damit die LED-Scheinwerfer beliebige Lichtfunktionen, bspw. Abblendlicht-, Fernlicht-, Nebellicht-, statisches oder dynamisches Kurvenlicht-, Stadtlicht-, Landstraßenlicht-, Autobahnlicht- oder beliebig andere statische oder adaptive Lichtverteilungen, erzeugen können.

Bei den aus dem Stand der Technik bekannten Lichtmodulen sind die Haltleiterlichtquellen üblicherweise auf einem Trägermodul aus einem Material mit einem hohen Wärmeleitfähigkeitswert, bspw. aus Metall, angeordnet. Dies ist insbesondere bei LED-Scheinwerfern der Fall, da die dort verwendeten Hochleistungs-LEDs während des Betriebs relativ viel Abwärme erzeugen, die über das Trägermodul an die Umgebung abgeführt werden muss, um eine Funktionsbeeinträchtigung oder gar Beschädigung der Beleuchtungseinrichtung bzw. ihrer Komponenten zu vermeiden. Ein Ansteuermodul zur Ansteuerung der LEDs ist als ein räumlich getrennt von den LEDs angeordnetes Steuergerät ausgebildet und steht über eine Stecker- und Kabel-Verbindung mit den LEDs in Verbindung. Da die Ansteuerung der Halbleiterlichtquellen üblicherweise über eine Pulsweitenmodulation erfolgt und die steilen Flanken des pulsweitenmodulierten Ansteuersignals elektromagnetische Störungen verursachen können, muss das Verbindungskabel zwischen Steuergerät und LEDs abgeschirmt sein. Zur Abschirmung wird bspw. ein die Leitungen umgebendes Metallgeflecht oder ein kombiniertes Kunststoff-Metall-Geflecht eingesetzt. Da das Lichtmodul mit den Halbleiterlichtquellen häufig entweder in horizontaler Richtung (zur Realisierung einer dynamischen Kurvenlichtfunktion) und/oder in vertikaler Richtung (zur Realisierung einer Leuchtweitenregelung) relativ zum räumlich getrennt angeordneten Steuergerät bewegbar ist, muss das abgeschirmte Verbindungskabel zudem möglichst flexibel und beweglich sein, um eine gleichförmige Bewegung des Lichtmoduls nicht zu behindern und eine Bewegung des Lichtmoduls ohne große Kraftanstrengung zu ermöglichen. Die räumliche Trennung von Halbleiterlichtquellen einerseits und Ansteuermodul andererseits bei dem bekannten Lichtmodulen führt somit zu einem erhöhten Platzbedarf sowie zu einem Mehraufwand und Mehrkosten bei der Fertigung und der Montage des Lichtmoduls.

Ausgehend von dem beschriebenen Stand der Technik liegt der vorliegenden Erfindung deshalb die Aufgabe zugrunde, die Nachteile des Standes der Technik zu überwinden und insbesondere eine einfache und kostengünstige Möglichkeit zur Herstellung und Montage des Lichtmoduls vorzuschlagen, das darüber hinaus auch problemlos relativ zu der übrigen Beleuchtungseinrichtung bewegt werden kann.

Zur Lösung dieser Aufgabe wird ein Lichtmodul mit den Merkmalen von Anspruch 1 vorgeschlagen.

Erfindungsgemäß dient das gemeinsame Trägermodul für Halbleiterlichtquellen und Ansteuermodul als Kühlkörper sowohl für die Halbleiterlichtquellen als auch für die Schaltung des Ansteuermoduls. Erfindungsgemäß ist die elektrische Verbindung zwischen den Halbleiterlichtquellen und der Schaltung des Ansteuermoduls nunmehr auch starr in Form eines Stanzgitters ausgebildet, da bei dem erfindungsgemäßen Lichtmodul die Halbleiterlichtquellen nicht relativ zum Ansteuermodul bewegbar sind. Vielmehr wird das gesamte Lichtmodul mit den Halbleiterlichtquellen und dem Ansteuermodul als eine Einheit bewegt. Erfindungsgemäß weist das Lichtmodul dem Trägermodul zugeordnete aktive Kühlmittel auf.

Es ist sogar denkbar, dass das Trägermodul derart ausgestaltet ist, dass eine Halterung für eine aktive Kühlung, bspw. in Form eines Lüfters, in das Trägermodul integriert ist.

Es wird also vorgeschlagen, die Halbleiterlichtquellen und das Ansteuermodul in einer gemeinsamen, einzeln handhabbaren Einheit zusammenzufassen. Diese weist als zentrales Element das Trägermodul auf. Dadurch ist es möglich, sowohl Kabel als auch Stecker der beim Stand der Technik erforderlichen Stecker- und Kabel-Verbindung einzusparen. Außerdem können sowohl im Steuergerät als auch an den Halbleiterlichtquellen die im Stand der Technik erforderliche Schutzvorrichtung, z.B. in Form eines Kurzschlussschutzes, eingespart werden. Wie bei herkömmlichen Lichtquellen in Form einer Halogen- bzw. Gasentladungsleuchte ist es bei dem erfindungsgemäßen Lichtmodul nunmehr möglich, das Lichtmodul bzw. einen Teil davon umfassend das Trägermodul, das Ansteuermodul und die Halbleiterlichtquellen als eine Einheit aus der Beleuchtungseinrichtung zu entnehmen und gegen ein anderes LED-Lichtmodul zu tauschen. Das erfindungsgemäße Lichtmodul kann zudem besonders kompakt ausgestaltet werden.

Zur Verbesserung der Wärmeabgabe durch das Trägermodul kann dieses passive Kühlelemente, bspw. Kühlrippen oder Kühlstifte, aufweisen.

Nachfolgend werden anhand der Figuren bevorzugte Ausführungsformen der vorliegenden Erfindung näher erläutert. Dabei sind funktionsäquivalente Bauteile oder Komponenten mit den gleichen Bezugszeichen benannt. Die Bauteile und Komponenten haben die angegebenen Merkmale und Vorteile nicht nur im Zusammenhang mit dem beschriebenen Ausführungsbeispiel, sondern auch jeweils für sich, ohne dass es der übrigen Bauteile und Komponenten des Ausführungsbeispiels bedarf. Es zeigen:
- Figur 1: eine aus dem Stand der Technik bekannte Beleuchtungseinrichtung; und
- Figur 2: ein erfindungsgemäßes Lichtmodul einer Beleuchtungseinrichtung gemäß einer bevorzugten Ausführungsform.

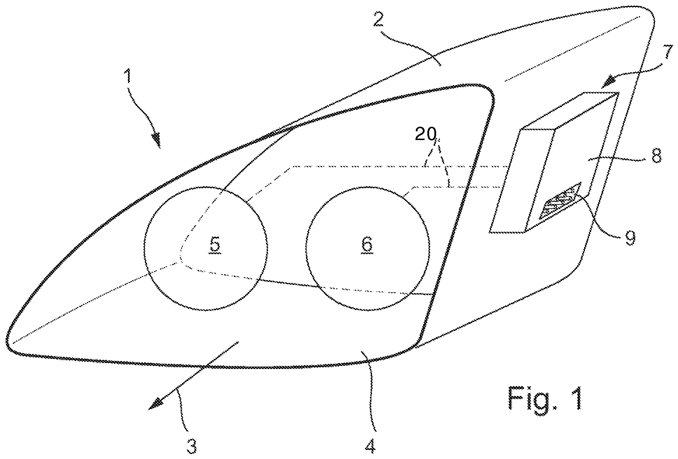

In Figur 1 ist eine bekannte Beleuchtungseinrichtung für ein Kraftfahrzeug in ihrer Gesamtheit mit dem Bezugszeichen 1 bezeichnet. Die Beleuchtungseinrichtung 1 ist als ein Kraftfahrzeugscheinwerfer ausgebildet. Selbstverständlich kann die Beleuchtungseinrichtung 1 auch als eine Leuchte, bspw. zur Anordnung am Heck oder einer Seite des Kraftfahrzeugs, ausgebildet sein. Der Scheinwerfer 1 umfasst ein Gehäuse 2, das vorzugsweise aus einem Kunststoff gefertigt ist. Das Scheinwerfergehäuse 2 weist in einer Lichtaustrittsrichtung 3 des Scheinwerfers 1 eine Lichtaustrittsöffnung auf, die durch eine transparente Abdeckscheibe 4 verschlossen ist. Die Abdeckscheibe 4 kann ohne optisch wirksame Profile (z.B. Prismen) als eine sog. klare Scheibe ausgebildet sein. Alternativ kann die Abdeckscheibe 4 auch zumindest bereichsweise mit optisch wirksamen Elementen versehen sein, die eine Streuung des hindurchtretenden Lichts, insbesondere in horizontaler Richtung, bewirken und damit die Erfüllung gesetzlicher Anforderungen an die Lichtverteilung verbessern bzw. ermöglichen. Die Abdeckscheibe 4 ist vorzugsweise aus farblosem, lichtdurchlässigem Kunststoff oder Glas gefertigt.

Im Inneren des Scheinwerfergehäuses 2 sind zwei Lichtmodule 5, 6 angeordnet. Selbstverständlich kann die Beleuchtungseinrichtung 1 auch weniger oder mehr als die in Figur 1 gezeigten zwei Lichtmodule 5, 6 aufweisen. Die Lichtmodule 5, 6 können während des bestimmungsgemäßen Betriebs des Scheinwerfers 1 relativ zum Gehäuse 2 bewegbar oder fest im Gehäuse 2 angeordnet sein. Eine Bewegung eines oder beider Lichtmodule 5, 6 in horizontaler Richtung dient bspw. der Realisierung einer dynamischen Kurvenlichtfunktion. Eine Bewegung eines oder mehrerer der Lichtmodule 5, 6 in vertikaler Richtung dient bspw. zur Realisierung einer Leuchtweitenregelung. Die Lichtmodule 5, 6 können als ein Reflexionsmodule und/oder als Projektionsmodule ausgebildet sein. Bei einem Reflexionsmodul wird das von einer Lichtquelle ausgesandte Licht durch einen Reflektor zur Erzeugung einer gewünschten Teil- oder Gesamtlichtverteilung auf die Fahrbahn vor das Fahrzeug reflektiert. Bei einem Projektionssystem wird das von einer Lichtquelle ausgesandte Licht von einer Primäroptik, bspw. einem Reflektor oder einer Vorsatzoptik, gebündelt und dann durch eine Sekundäroptik, die bspw. als eine Projektionslinse ausgebildet ist, zur Erzeugung der gewünschten Teil- oder Gesamtlichtverteilung auf die Fahrbahn vor das Kraftfahrzeug projiziert. Die gewünschte Lichtverteilung der Beleuchtungseinrichtung 1 kann durch einzelne Lichtmodule 5, 6 oder durch das Zusammenwirken mehrerer Lichtmodule 5, 6 erzeugt werden. Die Lichtmodule 5, 6 erzeugen in dem dargestellten Ausführungsbeispiel entweder allein oder gemeinsam eine Abblendlicht-, Fernlicht-, Nebellicht-, Stadtlicht-, Landstraßenlicht-, Autobahnlicht-, statische oder dynamische Kurvenlicht-, Tagfahrlicht-, Positionslicht- und/oder eine beliebig andere statische oder adaptive Lichtverteilung.

Die bekannte Beleuchtungseinrichtung 1 verfügt außerdem über ein Ansteuermodul in Form eines Steuergeräts 7, das beispielsweise außen am Scheinwerfergehäuse 2 angeflanscht ist. Eine elektrische Schaltung des Ansteuermoduls 7 ist in einem Steuergerätegehäuse 8 angeordnet. Das Gehäuse 8 besteht vorzugsweise aus einem elektromagnetische Strahlung abschirmenden Material, insbesondere Metall, besonders bevorzugt Aluminiumdruckguss. Von der elektrischen Schaltung des Ansteuermoduls 7 gehen Verbindungsleitungen 10 zu den Lichtmodulen 5, 6. Die Verbindungsleitungen 20 dienen zur Ansteuerung und/oder Energieversorgung der Lichtmodule 5, 6. Zur Verbesserung der EMV-Verträglichkeit sind die Leitungen 20 abgeschirmt, bspw. mittels eines die Leitungen 20 umgebenden Metall-Geflechts oder eines Metall-Kunststoff-Geflechts. Wenn die Lichtmodule 5, 6 relativ zum Scheinwerfergehäuse 2 bewegbar gelagert sind, müssen die Leitungen 20 sowie die Abschirmung flexibel ausgebildet sein. Die Leitungen 20 sind durch eine Öffnung im Scheinwerfergehäuse 2 unterhalb des Steuergerätegehäuses 8 in das Innere des Gehäuses 2 geführt. Das Steuergerätegehäuse 8 weist eine Öffnung auf, durch die von außen auf ein Stecker-/Buchsenelement 9 der elektrischen Schaltung des Ansteuermoduls 7 zugegriffen werden kann. Über das Stecker-/Buchsenelement 9 kann das Ansteuermodul 7 mit einem übergeordneten Steuergerät (z.B. einem sogenannten Bodycontroller) und/oder mit einer Energieversorgung des Kraftfahrzeugs, bspw. mit der Fahrzeugbatterie, in Verbindung stehen.

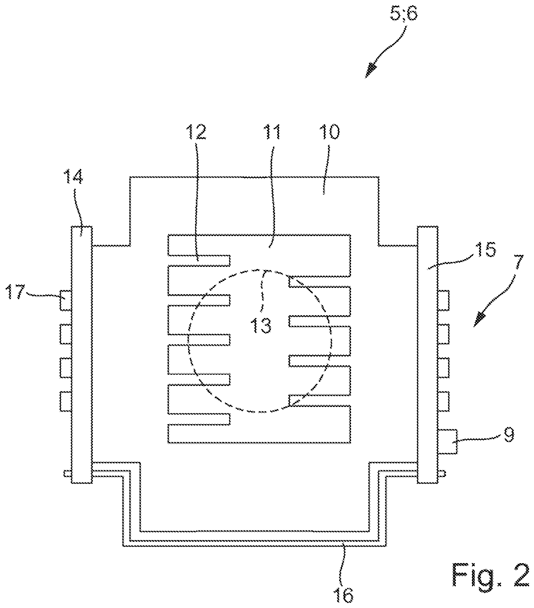

Durch die räumliche Trennung der Lichtmodule 5, 6 und des Steuergeräts 7 ergeben sich bei der bekannten Beleuchtungseinrichtung 1 aus Figur 1 Nachteile, die durch die erfindungsgemäße Ausgestaltung des Lichtmoduls 5, 6, wie sie beispielhaft in Figur 2 dargestellt ist, vermieden werden. Das erfindungsgemäße Lichtmodul 5; 6 umfasst ein Trägermodul 10, das aus einem Material mit einem hohen Wärmeleitfähigkeitswert besteht. Das Trägermodul 10 besteht vorzugsweise aus einem Metall, insbesondere aus Aluminium. Vorzugsweise wird das Trägermodul 10 mittels Druckguss gefertigt. Das Trägermodul 10 dient zur Wärmeableitung und gleichzeitig als Befestigung der Komponenten des Lichtmoduls 5; 6.

Zur Verbesserung der Wärmeableitung weist das Trägermodul 10 einen Hohlraum 11 auf, in den passive Kühlelemente 12, bspw. in Form von Kühlrippen und/oder Kühlstiften, hineinragen. Dem Trägermodul 10 sind vorzugsweise aktive Kühlmittel, bspw. in Form eines Lüfters, zugeordnet. Dabei ist es besonders vorteilhaft, wenn eine Halterung für den Lüfter in das Trägermodul 10 integriert ist. Selbstverständlich ist es denkbar, dass das Trägermodul 10 des erfindungsgemäßen Lichtmoduls 5; 6 ohne Hohlraum 11 ausgebildet ist. In diesem Fall könnten die passiven Kühlelemente 12 an einer Außenseite des Trägermoduls 10 ausgebildet sein.

Bei dem erfindungsgemäßen Lichtmodul 5; 6 sind Halbleiterlichtquellen 17 in Form von LEDs auf einem Trägerelement 14 angeordnet. Das Trägerelement 14 ist bspw. als eine Metallkernplatine ausgebildet. Der LED-Träger 14 wird auf das Trägermodul 10 montiert, z.B. mittels Schrauben oder Kleben. Eine elektrische Schaltung des Ansteuermoduls 7 ist auf einer konventionellen Leiterplatte 15, bspw. einer FR4-Platine, ausgebildet. Die elektrische Schaltung des Ansteuermoduls 7 umfasst bspw. auch das Stecker-/Buchsenelement 9. Eine Vielzahl anderer Bestandteile der elektrischen Schaltung, wie bspw. elektrische und elektronische Bauelemente sowie Leiterbahnen, sind ebenfalls auf bzw. in der Leiterplatte 15 ausgebildet, aber in Figur 2 nicht gesondert dargestellt. Auch die Leiterplatte 15 des Ansteuermoduls 7 ist auf dem Trägermodul 10 montiert, bspw. mittels Schrauben oder Kleben.

Zwischen den Halbleiterlichtquellen 17 bzw. dem Trägerelement 14 einerseits und der elektrischen Schaltung des Ansteuermoduls 7 bzw. der Leiterplatte 15 andererseits sind elektrische Verbindungen 16 in oder an dem Trägermodul 10 ausgebildet. In dem dargestellten Ausführungsbeispiel sind die Verbindungen 16 in Form eines Stanzgitters realisiert, das entlang der Unterseite des Trägermoduls 10 verläuft. Das Stanzgitter 16 kann mit einem elektrisch isolierenden Material, bspw. einem Kunststoff, umspritzt sein. Die Kontaktierung der elektrischen Komponenten (LEDs 17 oder elektrische Leitungen des Trägerelements 14; elektrische Leitungen oder Bauelemente der Schaltung des Ansteuermoduls 7) mit dem Stanzgitter 16 erfolgt vorzugsweise mittels einer Einpresstechnik. Ebenso ist es aber möglich, dass die Kontaktierung mittels einer Löt- oder Bonding-Verbindung erfolgt.

Anders als bei der bekannten Beleuchtungseinrichtung aus Figur 1 ist bei der erfindungsgemäßen Beleuchtungseinrichtung also das Steuergerät 7 integraler Bestandteil zumindest eines der Lichtmodule 5, 6. Auf die Verbindungsleitungen 10 und entsprechende Steckerelemente kann bei der Erfindung somit verzichtet werden.

Besonders vorteilhaft ist es an dem erfindungsgemäßen Lichtmodul 5, 6, dass bei einem Defekt des Lichtmoduls 5, 6 oder eines Teils davon, bspw. einer LED 17, das gesamte Lichtmodul 5, 6 als Einheit gegen ein neues, voll funktionsfähiges Lichtmodul 5, 6 ausgetauscht werden kann. Zu diesem Zweck ist es denkbar, dass eine elektrische Verbindung zur Energieversorgung des Lichtmoduls 5; 6 und/oder zur Anbindung des Ansteuermoduls 7 an ein übergeordneten Steuergerät (z.B. einen sogenannten Bodykontroller) das Stecker-/Buchsenelement 9 mit einem entsprechenden Buchsen-/Steckerelement der Beleuchtungseinrichtung 1 lösbar in Eingriff tritt.

Außer den in Figur 2 gezeigten Bauteilen und Komponenten kann das erfindungsgemäße Lichtmodul 5; 6 noch weitere Bauteile und Komponenten aufweisen, die in Figur 2 jedoch nicht dargestellt sind. Derartige Bauteile oder Komponenten sind bspw. eine Primäroptik (z.B. Reflektor oder Vorsatzlinse) zur Bündelung der von den LEDs 17 ausgesandten Lichtstrahlen sowie eine Sekundäroptik (z.B. Projektionslinse), um die Lichtstrahlen der LEDs 17 zur Erzeugung einer gewünschten Teil- oder Gesamtlichtverteilung der Beleuchtungseinrichtung 1 auf die Fahrbahn vor das Kraftfahrzeug zu projizieren. Außerdem wäre es denkbar, dass das Lichtmodul 5, 6 über zusätzliche Mittel (z.B. eine Blendenanordnung) verfügt, welche eine Variation der erzeugten Lichtverteilung erlauben. Zur Erzeugung einer variablen Lichtverteilung können die Mittel auch bewegbar ausgebildet sein, so dass sie mehr oder weniger in den Strahlengang eingeführt bzw. aus diesem heraus bewegt werden können.

Das Trägerelement 14, auf dem die LEDs 17 montiert sind, kann auch als eine herkömmliche Leiterplatte oder als ein sogenanntes Flexboard ausgebildet sein. Die LEDs 17 sind vorzugsweise auf das Trägerelement 14 aufgelötet. Das Ansteuermodul 7 ist auf einer separaten Leiterplatte 15 angeordnet. Es wäre denkbar, dass das Trägermodul 10 als ein standardisiertes Aufnahmemodul ausgebildet ist, an dem das Trägerelement 14 sowie die Leiterplatte 15 mittels standardisierter Verbindungen mechanisch befestigt und elektrisch kontaktiert werden kann. Die standardisierten Verbindungen können bspw. als Steckverbindungen ausgebildet sein. Das hat den Vorteil, dass sowohl die LEDs 17 als auch das Ansteuermodul 7 auf einem standardisierten Modul angeordnet und befestigt sind. Das Trägerelement 14 kann an dem Aufnahmemodul 10 des weiteren bspw. mittels einer Rast-, Schraub- oder Nietverbindung befestigt werden. Die elektrische Verbindung erfolgt über das ebenfalls standardisierte Aufnahmemodul 10. Hierdurch werden die elektrischen Verbindungen vereinfacht. Zusätzlich werden durch standardisierte Module höhere Stückzahlen erreicht und es können Entwicklungskosten eingespart werden, da auf voll funktionsfähige und ausreichend getestete Module zugegriffen werden kann.

Die standardisierten Module 17, 14; 7, 15 und 10 sind für unterschiedliche Projekte einsetzbar, so dass höhere Stückzahlen und niedrigere Entwicklungskosten anfallen. Durch die Verwendung der standardisierten Module 17, 14; 7, 15 und 10 kann zudem der Validierungsaufwand reduziert werden. Bei der Verwendung von Modulen mit integriertem Stromregler ist eine Sortierung der LED-Helligkeitsbins nicht notwendig, da jede LED 17 eine eigene einstellbare Stromquelle besitzt. Bei einem Defekt von Teilen des Lichtmoduls 5; 6 wäre es sogar denkbar, die Module 17, 4; 7, 15; 10 einzeln zu tauschen, wodurch ein relativ teures Auswechseln des gesamten Lichtmoduls 5; 6 vermieden wird. Da das Lichtmodul 5; 6 keine beweglichen Leitungen umfasst, besteht keine Kurzschlussgefahr. Zudem können Leitungen und Steckverbindungen in erheblichem Maße eingespart werden.

Das Aufnahmemodul 10 hat die Aufgaben einer mechanischen Fixierung des Trägerelements 14 mit den LEDs 17 sowie der Leiterplatte 15 mit der elektrischen Schaltung des Ansteuermoduls 7. Außerdem dient es zur Aufnahme und Halterung der elektrischen Verbindungen (z.B. Stanzgitter 16; Leitungen o.ä.). Des Weiteren ist in das Aufnahmemodul 10 eine Kühlung (z.B. passive Kühlelemente 12 oder aktive Kühlmittel 13) oder eine mechanische Halterung für die aktiven Kühlmittel (z.B. Lüfter) integriert. Schließlich kann das Aufnahmemodul 10 auch noch zur Halterung und Befestigung zusätzlicher Bauteile und Komponenten (z.B. einer Optik) des Lichtmoduls 5; 6 herangezogen werden.

Gemäß einer anderen Weiterbildung der Erfindung ist es denkbar, dass die Halbleitlichtquellen 17 und die Schaltung des Ansteuermoduls 7 auf demselben Trägerelement angeordnet sind. In diesem Fall wäre auch die elektrische Verbindung 16 auf dem gemeinsamen Trägerelement realisiert, bspw. in Form von Leiterbahnen. Das Trägerelement könnte als eine Metallkernplatine, ein Flexboard oder eine FR4-Platine ausgebildet sein. Es ist denkbar, das eine Trägerelement so zu biegen, dass es an die äußere Form des Trägermoduls 10 angepasst ist. Die Kontaktierung der Schaltung des Ansteuermoduls 7 sowie der LEDs 17 auf dem gemeinsamen Trägerelement erfolgt bspw. durch sogenannte Gull Wing Leads oder J-Type Leads. Bei dieser Ausführung kann die erforderliche Verkabelung (z.B. das Stanzgitter 16 aus Figur 2) eingespart werden. Die Größen und Abmessungen der Module 17, 14; 7; 15; 10 sind variabel. Fixpunkte, die bei allen Modulen nach Möglichkeit eingehalten werden sollten, sind lediglich die mechanische Fixierung der Module 17, 14; 7, 15 auf dem Aufnahmemodul 10 sowie deren elektrischen Kontaktierungen.

## Patentansprüche

1. Lichtmodul (5; 6) für eine Beleuchtungseinrichtung (1) eines Kraftfahrzeugs, das Lichtmodul (5; 6) umfassend mindestens eine Halbleiterlichtquelle (17) sowie ein mit der mindestens einen Halbleiterlichtquelle (17) in Verbindung stehendes Ansteuermodul (7), wobei das Lichtmodul (5; 6) ein Trägermodul (10) aus einem Material mit einem hohen Wärmeleitfähigkeitswert aufweist, an dem sowohl die mindestens eine Halbleiterlichtquelle (17) als auch eine elektrische Schaltung des Ansteuermoduls (7) angeordnet sind, und wobei das Ansteuermodul (7) ein Stecker-/ Buchsenelement (9) aufweist, über welches das Ansteuermodul (7) mit einem übergeordneten Steuergerät und/oder mit einer Energieversorgung des Kraftfahrzeugs verbindbar ist, **dadurch gekennzeichnet, dass** die elektrische Verbindung zwischen dem Ansteuermodul (7) und der mindestens einen Halbleiterlichtquelle (17) ein Stanzgitter (16) umfasst, das an dem Trägermodul (10) angeordnet ist und dass das Lichtmodul (5; 6) dem Trägermodul (10) zugeordnete aktive Kühlmittel (13), insbesondere einen Lüfter, aufweist.

2. Lichtmodul (5; 6) nach Anspruch 1, **dadurch gekennzeichnet, dass** die mindestens eine Halbleiterlichtquelle (17) und das Ansteuermodul (7) auf unterschiedlichen Seiten, vorzugsweise auf gegenüberliegenden Seiten, des Trägermoduls (10) angeordnet sind.

3. Lichtmodul (5; 6) nach Anspruch 1 oder 2, **dadurch gekennzeichnet, dass** das Stanzgitter (16) mit einem isolierenden Material, vorzugsweise mit Kunststoff, ummantelt ist.

4. Lichtmodul (5; 6) nach einem der Ansprüche 1 bis 3, **dadurch gekennzeichnet, dass** das Trägermodul (10) passive Kühlelemente (12), insbesondere Kühlrippen und/oder Kühlstifte, zur Vergrößerung der Oberfläche des Trägermoduls (10) aufweist.

5. Lichtmodul (5; 6) nach einem der Ansprüche 1 bis 4, **dadurch gekennzeichnet, dass** die mindestens eine Halbleiterlichtquelle (17) auf einem Trägerelement (14) montiert ist, das seinerseits an dem Trägermodul (10) befestigt ist.

6. Lichtmodul (5; 6) nach Anspruch 5, **dadurch gekennzeichnet, dass** das Trägerelement (14) eine Metallkernleiterplatine umfasst.

7. Lichtmodul (5; 6) nach einem der Ansprüche 1 bis 6, **dadurch gekennzeichnet, dass** das Ansteuermodul (7) eine an dem Trägermodul (10) befestigte Leiterplatte (15), insbesondere eine FR4-Platine, umfasst, auf der die elektrische Schaltung des Ansteuermoduls (7) ausgebildet ist.

8. Beleuchtungseinrichtung (1) eines Kraftfahrzeugs, umfassend mindestens ein Lichtmodul (5; 6) mit mindestens einer Halbleiterlichtquelle (17), **dadurch gekennzeichnet, dass** das Lichtmodul (5; 6) nach einem der Ansprüche 1 bis 7 ausgebildet ist.

## Claims

1. Light module (5; 6) for a lighting device (1) of a motor vehicle, the light module (5; 6) comprising at least one semiconductor light source (17) and a control module (7) connected to the at least one semiconductor light source (17), the light module (5; 6) comprising a carrier module (10) made of a material having high thermal conductivity, on which both the at least one semiconductor light source (17) and an electrical circuit of the control module (7) are arranged, and the control module (7) comprising a plug/socket element (9), by means of which the control module (7) can be connected to a higher-level controller and/or to a power supply of the motor vehicle, **characterised in that** the electrical connection between the control module (7) and the at least one semiconductor light source (17) comprises a lead frame (16) which is arranged on the carrier module (10), and **in that** the light module (5; 6) comprises active cooling means (13), in particular a fan, associated with the carrier module (10).

2. Light module (5; 6) according to claim 1, **characterised in that** the at least one semiconductor light source (17) and the control module (7) are arranged on different sides, preferably on opposite sides, of the carrier module (10).

3. Light module (5; 6) according to either claim 1 or claim 2, **characterised in that** the lead frame (16) is covered in an insulating material, preferably in plastics material.

4. Light module (5; 6) according to any of claims 1 to 3, **characterised in that** the carrier module (10) comprises passive cooling elements (12), in particular cooling ribs and/or cooling pins, for enlarging the surface area of the carrier module (10).

5. Light module (5; 6) according to any of claims 1 to 4, **characterised in that** the at least one semiconductor light module (17) is mounted on a carrier element (14), which is in turn fastened to the carrier module (10).

6. Light module (5; 6) according to claim 5, **characterised in that** the carrier element (14) comprises a metal core printed circuit board.

7. Light module (5; 6) according to any of claims 1 to 6, **characterised in that** the control module (7) comprises a printed circuit board (15), in particular a FR4 board, which is fastened to the carrier module (10) and on which the electrical circuit of the control module (7) is formed.

8. Lighting device (1) of a motor vehicle, comprising at least one light module (5; 6) having at least one semiconductor light source (17), **characterised in that** the light module (5; 6) is designed according to any of claims 1 to 7.

## Revendications

1. Module d'éclairage (5 ; 6) pour un dispositif d'éclairage (1) d'un véhicule automobile, le module d'éclairage (5 ; 6) comprenant au moins une source lumineuse semiconductrice (17) ainsi qu'un module de commande (7) relié à ladite au moins une source lumineuse semiconductrice (17), le module d'éclairage (5 ; 6) comprenant un module de support (10) en un matériau ayant une forte conductivité thermique sur lequel aussi bien ladite au moins une source lumineuse semiconductrice (17) qu'un circuit électrique du module de commande (7) sont disposés, et le module de commande (7) comprenant un élément fiche/prise (9) par le biais duquel le module de commande (7) est susceptible d'être connecté à un appareil de commande supérieur et/ou à une alimentation en énergie du véhicule automobile,
**caractérisé en ce que** la connexion électrique entre le module de commande (7) et ladite au moins une source lumineuse semiconductrice (17) comprend une grille découpée (16) qui est disposée sur le module de support (10), et **en ce que** le module d'éclairage (5 ; 6) comprend des moyens de refroidissement actifs (13), notamment un ventilateur, associés au module de support (10).

2. Module d'éclairage (5 ; 6) selon la revendication 1, **caractérisé en ce que** ladite au moins une source lumineuse semiconductrice (17) et le module de commande (7) sont disposés sur des côtés différents, de préférence sur des côtés opposés, du module de support (10).

3. Module d'éclairage (5 ; 6) selon la revendication 1 ou 2, **caractérisé en ce que** la grille découpée (16) est revêtue d'un matériau isolant, de préférence d'une matière synthétique.

4. Module d'éclairage (5 ; 6) selon l'une des revendications 1 à 3, **caractérisé en ce que** le module de support (10) comprend des moyens de refroidissement passifs (12), notamment des ailettes de refroidissement et/ou des broches de refroidissement, pour augmenter la superficie du module de support (10).

5. Module d'éclairage (5 ; 6) selon l'une des revendications 1 à 4, **caractérisé en ce que** ladite au moins une source lumineuse semiconductrice (17) est montée sur un élément de support (14) qui est lui-même fixé sur le module de support (10).

6. Module d'éclairage (5 ; 6) selon la revendication 5, **caractérisé en ce que** l'élément de support (14) est ne carte de circuit imprimé à noyau métallique.

7. Module d'éclairage (5 ; 6) selon l'une des revendications 1 à 6, **caractérisé en ce que** le module de commande (7) comprend une carte de conducteurs imprimés (15) fixée sur le module de support (10), notamment une carte FR4, sur laquelle le circuit électrique du module de commande (7) est formé.

8. Dispositif d'éclairage (1) d'un véhicule automobile comprenant au moins un module d'éclairage (5 ; 6) avec au moins une source lumineuse semiconductrice (17), **caractérisé en ce que** le module d'éclairage (5 ; 6) est formé selon l'une des revendications 1 à 7.
